Europäisches Patentamt

European Patent Office

Office européen des brevets

(11) Publication number: **0 042 690**
**B1**

(12) **EUROPEAN PATENT SPECIFICATION**

(45) Date of publication of patent specification: **02.01.86**

(21) Application number: **81302549.1**

(22) Date of filing: **09.06.81**

(51) Int. Cl.⁴: **B 60 L 5/36,** B 60 M 3/00

(54) Current collection apparatus for electric vehicles and their supply systems.

(30) Priority: **23.06.80 GB 8020421**
**06.10.80 GB 8032080**

(43) Date of publication of application:
**30.12.81 Bulletin 81/52**

(45) Publication of the grant of the patent:
**02.01.86 Bulletin 86/01**

(84) Designated Contracting States:
**AT CH DE FR GB IT LI SE**

(56) References cited:
**DE-A-1 949 041**
**DE-A-2 244 392**
**FR-A- 617 297**
**GB-A- 681 182**

(73) Proprietor: **Dilger, Lawrence**
**16 Charlwood The Green**
**Forestdale Croydon, Surrey 9AT (GB)**

(72) Inventor: **Dilger, Lawrence**
**16 Charlwood The Green**
**Forestdale Croydon, Surrey 9AT (GB)**

(74) Representative: **George, Roger David et al**
**Raworth, Moss & Cook 36 Sydenham Road**
**Croydon Surrey CR0 2EF (GB)**

Courier Press, Leamington Spa, England.

## Description

This invention relates to a current collection apparatus for an electric vehicle and an electrical supply system therefor.

In any electrical supply system employing current carrying conductors for energising the current collectors of an electric vehicle (e.g. a trolley bus) powered by electrically energised traction means along a vehicle route path, the minimum number of current conductors for the supply of electrical power consists of a current conductor for each specific "energising characteristic" (i.e. each polarity or phase) of the system. Thus, a direct current (D.C.) system has two conductors; a single phase alternating current system has two conductors and a three phase delta alternating current system has a minimum of three conductors. In practice hitherto such supply systems for electric vehicles (e.g. trolley buses) have employed the minimum number of conductors.

These systems were so designed that, when the path of a vehicle e.g. a trolley bus deviated from the direct path of the current conductors, then electrical contact was still maintained with the same conductors. By way of illustration, if a trolley bus was to move round an obstruction (assuming access to the conductors is still possible), this was accomplished mechanically by arranging for the trolley poles carrying shoes having conductor elements (which collected the current e.g. from the two DC conductors) to swing out relative to the path of the vehicle (trolley bus), thereby by mechanical adjustment of the position of the conductor elements relative to the trolley bus maintaining electrical contact with the same current conductors despite the lateral movement of the trolley bus relative to the path of the conductors. The problems which arise are well known. At route junctions it is necessary either to re-route the shoes by means of points ("frogs"), or for the poles to be mechanically lowered and for the trolley bus to transfer to the route of another conductor path using power derived from an auxiliary supply, i.e. batteries. Even whilst the trolley bus proceeded along a route such collector shoes are prone to leave the conductors (wires) against which they are held resiliently biased, causing vehicle power loss and often damage to the conductors or collector shoes. Another problem is sparking between the collector shoes and the wires. An operation problem was caused by the inability with this system of one trolley bus to pass another because the poles of the first obstruct the poles of the second.

A search has revealed United Kingdom patent specification nos. 407,244 and 476,546 which disclose power supply systems for electrical vehicles in which parallel lanes of the route each have current conductors for the vehicle whereby the vehicle may change lanes, by transverse movement between the current conductors of one lane to another lane, e.g. at passing locations or route junctions. In those specifications there is no disclosure as to how current collection is maintained at all times during the transverse movement nor is there any disclosure of the current collection apparatus apart from the collector shoes or contacts. Patent No. 407,546 merely discloses a number of contacts corresponding to the number of current conductors in a given lane i.e. two contacts for direct current and three contacts for a three phase system. It is concerned with the provision of additional insulated cables (not receiving current) in order to prevent the contacts catching over the live wires during transverse movement. The individual contacts are stated to be incapable of bridging two adjacent wires (current conductors). The current conductors (in parallel lanes) are stated to carry current of each phase in the sequence 1, 2, 3, 1, 2, 3. Patent of Addition No. 476,546 does disclose in one embodiment with a supply system in which pairs of conductors occurring in the same relative order (i.e. polarities 1, 2, 1, 2) and in which the contact member has four contacts. In this embodiment (Page 2 lines 29 to 36) "the distance between adjacent conductors, which is the same all along the web, is equal to the distance between the centres of the sliding contacts, and the width of each sliding contact is made less than the distance between two adjacent conductors, so as not to short circuit the line when transverse movement takes place".

The disclosure is totally silent as to the manner in which the collection apparatus feeds the current to the vehicle and whether direct current or alternating current motors are employed in the vehicle. Furthermore with the stated geometry (i.e. spacings between conductors and widths and arrangements of the sliding contacts) dead spots inevitably occur as the vehicle moves transversely of the conductors since at certain transverse locations of the contacts relative to the conductors there is no electrical connection therebetween and thus, at best, an intermittent electrical coupling. In addition, the pitching or spacing between conductors in the system shown in this patent must be to a degree or tolerance which in practice is difficult to achieve, otherwise the transverse movements of the trolley bus along a single lane may lead to loss of power connection. In practice therefore the system of Patent No. 476,546 in the absence of suitable current collection apparatus, is not viable.

DE—A—1 949 041, is concerned with a method and apparatus for the free movement of trackless road vehicles to which electric power is fed from overhead lines strung above the road. There is proposed a current collecting means which is composed of a plurality of individual sliding contacts, such current collecting means having a horizontal surface structure in each direction a dimension which, in the case of direct or single-phase alternating current at least exceeds the distance between two overhead contact wires or in the case of three phase current at least the distance between three overhead contact wires.

As reason for this dimension to extend in each direction it is indicated that, in connection with a free movement of the trackless road vehicle, an uninterrupted supply of current to the vehicle shall be achieved. However, with a dimension only equal to the said distance, it will be seen that displacement of the current collecting means laterally of the direction of the overhead conductors does not ensure contact with a third overhead conductor before disengagement with a first one of the two conductors required for a direct or single-phase current supply or contact with a fourth overhead conductor before disengagement with a first one of the three conductors required for a three-phase supply. Thus although the disclosed current collecting means will maintain continuity of the current supply as long as the current collecting means is moving in the direction of the overhead conductors, this continuity would be interrupted by lateral displacement of the collecting means relative to such direction of the overhead conductors. Obviously, the intended uninterrupted current supply requires a larger dimension of the horizontal surface structure of the current collecting means than specified in the document.

Various configurations are disclosed for the individual sliding contacts such as straight, curved, annular or polygonal with the feature that these have a horizontal dimension smaller than the smallest distance between the conductors of the overhead supply and various configurations are disclosed for the current collecting means to achieve the defined dimension in each direction. The individual sliding contacts are each connected to the bus-bars of the vehicle by opposed diodes. The intended completely free movement of the vehicle requires relatively complicated configurations of the current collecting means.

The present invention seeks to avoid these disadvantages by providing current collection apparatus for an electric vehicle which is capable of providing the electrical power for vehicle traction from an electrical supply system, routed along the vehicle route, wherein the lateral movement of the vehicle relative to the path of the conduction lines from one lane to another without changing the general direction of travel is achieved by a change of effective electrical coupling from one set of conductor lines during which current collection is continuous, and entailing the use, at least at certain vehicle route positions, of an auxiliary conductor or auxiliary conductors in addition to said minimum number of conductors.

According to the present invention there is provided current collection apparatus for an electric road vehicle, such as a trolley bus, with a pantograph, the apparatus being energised by an overhead electrical supply system comprising a plurality of spaced substantially parallel conductors extending in the intended direction of travel of the vehicle and corresponding in number at least to the number of conductors required to carry different energising characteristics of the supply system plus at least one spaced and parallel auxiliary transfer conductor, said apparatus comprising collection means having a plurality of separate collection elements having a dimension less than the spacing between adjacent overhead conductors, separate direct current terminal means for each polarity of a direct current vehicle electrical supply system, a pair of oppositely arranged unidirectional current conducting devices coupling each collection element to each terminal means whereby each terminal means, in use, receives current of a respective polarity, characterised in that for lateral displacement of the collecting means relative to the overhead conductors without interrupting the current supply to the terminal means the collection means comprises a collector bar intended to extend transversely of the overhead conductors and composed of a plurality of collection elements distributed in spaced apart and parallel or aligned arrangement along the length of the collector bar and corresponding in number at least to the number of overhead conductors required to carry the different energising characteristics plus the auxiliary transfer conductor and the spacing between the auxiliary transfer conductor and the most remote of the adjacent number of overhead conductors required to carry the different energising characteristics is less than the effective length of the collector bar multiplied by the cosine of an angle not greater than 30°.

It is envisaged that a direct current supply for use in a vehicle may be derived from an electrical supply routed along the vehicle route in the form of a direct current supply, a single-phase alternating current supply or even a three phase delta, alternating current supply. In each instance, the vehicle supply only requires first terminal means carrying current of a first polarity (positive/live) and a second terminal means carrying current of a second polarity (negative/neutral).

Embodiments of the invention will now be described by way of example only with reference to the accompanying drawimgs, in which:—

Figs. 1A to 1C illustrate schematically current collection apparatus and current conductors of an electrical supply system for direct current supply, single phase alternating current supply and three phase delta alternating current supply respectively, each providing a direct current output for a vehicle;

Fig. 2 illustrates schematically the movement of current collection apparatus according to any one of Figs. 1A to 1C along their associated current conductors whilst maintaining the electrical supply;

Fig. 3 illustrates schematically the collection means of current collection apparatus, formed with two series of collection elements disposed in relation to current conductors of a supply system;

Fig. 4 illustrates schematically an electrical supply system routed along a plurality of vehicle routes;

Fig. 5 illustrates schematically a pantograph associated with current collection apparatus and vehicle electrical system for use with a trolley bus; and,

Fig. 6 illustrates schematically current collection means of current collection apparatus, which is a modification of the collection means shown in Fig. 1A.

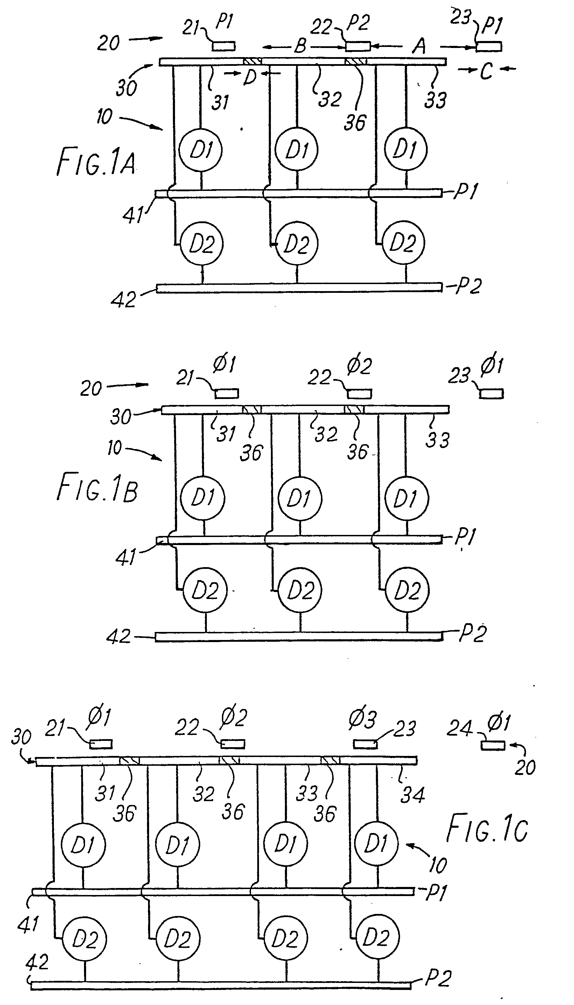

Reference is now made to Figs. 1A to 1C of the drawings. The current collection apparatus 10 for an electric vehicle is shown disposed in close proximity to an electrical supply system 20 routed along a vehicle route and including current conductors 21 to 23 or 24. The apparatus 10 has collection means 30 with a first series of collection elements 31 to 33 (Figs. 1A, 1B) and 31 to 34 (Fig. 1C): in practice elements 31 to 33 actually contact the current conductors 21 to 23 or 21 to 24. The number of the collection elements, which is the three elements 31 to 33 in Figs. 1A and 1B and the four elements 31 to 34 in Fig. 1C correspond to the number of current conductors carrying different energising characteristics in each of the supply systems of Figs. 1A to 1C respectively (as will be explained) plus a transfer or 'auxiliary' conductor. The energising characteristics of the current conductors in Figs. 1A to 1C are indicated by P1, P2 for positive polarity and negative polarity (or vice versa) in Fig. 1A, $Ø_1$, $Ø_2$ for positive and negative phase in Fig. 1B and $Ø_1$, $Ø_2$, $Ø_3$ for three different phases in Fig. 1C. Thus the supply system of Figs. 1A and 1B has two different energising characteristics and collection means for use therewith has at least the three collection elements 31 to 33. Notionally conductor 23 may be regarded as an auxiliary or transfer conductor in Figs. 1A and 1B: in practice there is no distinction between the conductors save that alternate conductors have opposite polarity P1 or P2 (Fig. 1A) or opposite phase $Ø_1$ and $Ø_2$ (Fig. 1B). Likewise in Fig. 1C the supply system has three different energising characteristics and the collection means 10 for use therewith has at least four collection elements 31 to 34. Notionally conductor 24 (Fig. 1C) may be regarded as an auxiliary or transfer conductor in Fig. 1C: again, in practice there is no distinction between the conductors save that any three adjacent conductors have the different phases $Ø_1$, $Ø_2$, $Ø_3$. For illustrative purposes (Fig. 1A), the pitch A and width C of the current conductors 21 to 24 have been shown to be regular. Likewise the width B and separation D of the collection elements has been shown to be regular. Furthermore, also for illustrative purposes, the collection elements 31 to 33 or 31 to 34 have been shown in parallel (laterally of the current conductors 21 to 23/24). Such geometry may be varied without departing from the present invention.

The nature of the collection elements 31 to 33 or 31 to 34 and the current conductors 21 to 24 will depend on the type of vehicle and the location of the current conductors relative to the vehicle route. The main application envisaged is in connection with trolley buses for which the collection means will be a collection bar 30 with conductive segments forming the collection elements 31 to 33 or 34 and insulating segments 36 therebetween. In the supply system for trolley buses, the current conductors 21 to 24 are overhead cables suspended in known manner.

In each of Figs. 1A to 1C there are a pair of terminal means 41, 42 illustrated as bus bars, for each polarity P1 or P2 for connection thereby of a direct current supply to the vehicle electrical supply system. A pair of oppositely arranged unidirectional current devices D1 and D2 couple each collection element 31 to 33 or 31 to 34 to each terminal means 41, 42 whereby each terminal means 41, 42, in use, always receives current of a respective polarity P1 or P2. The collection elements 31 to 33 or 31 to 34 are arranged such that, when presented to a system of current conductors 21 to 23 or 24, the arrangement of the elements 31 to 33 or 34 avoids short-circuiting of the current conductors 21 to 23, whilst at all times the arrangement affords a current path between each terminal means 41, 42 and a current conductor 21 to 23 or 24. Short-circuiting is avoided in these embodiments by ensuring that the width B of collection elements 31 to 33/34 is less than the pitch A between current conductors 21 to 24.

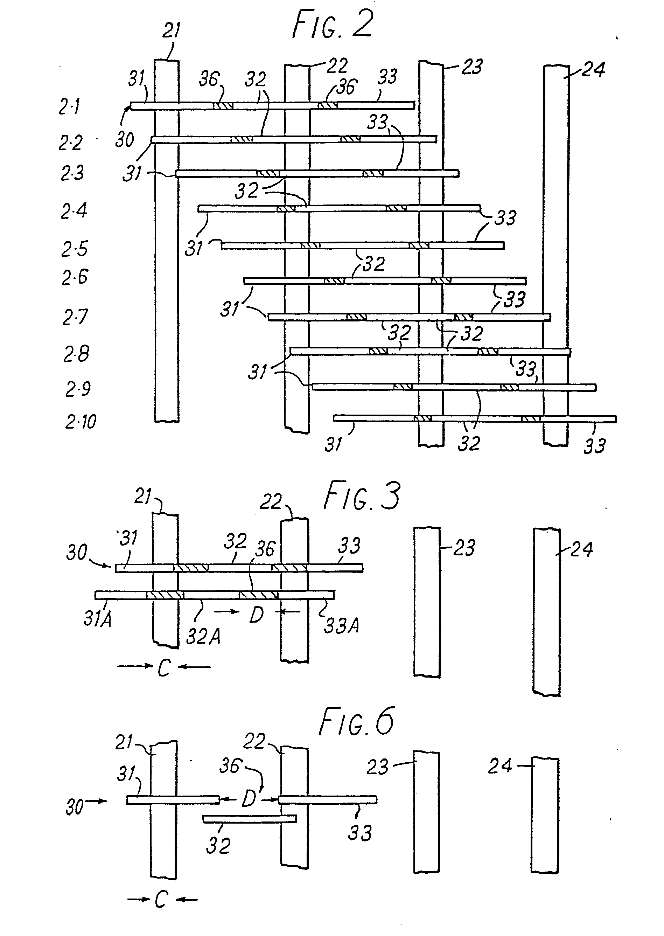

With the supply systems of Figs. 1A and 1B, the current collection apparatus 10 is required to collect from at least one positive conductor 21 or 23 and one negative conductor 22 at any given instant. As shown in Fig. 2, a minimum of three current conductors 21 to 23 will be present at route locations where the vehicle is to deviate from the path of the two essential conductors 21, 22 (one positive P1, one negative P2) which it has followed. For a vehicle to pass another vehicle four current conductors 21 to 24 will be necessary in order that vehicle can transfer (in stages) from one pair of conductors 21, 22 impeded by another vehicle to another free pair of conductors 23, 24 passing by the impeding vehicle. Such a transfer can be accomplished with collection means 10 having a series of at least three collection elements 31 to 33. It is necessary that any adjacent pair of supply conductors 21 to 24 have opposite phase $Ø_1$, $Ø_2$ or polarity P1, P2.

As indicated in Fig. 2, the arrangement of the collection elements 31 to 33 is such that as the collection means 30 moves transversely to the path of the current conductors 21 to 24, a pair of the collection elements 31, 32 or 32, 33 or 31, 33 provides contact with a pair of current conductors 21, 22 or 22, 23 or 22, 23 respectively, of opposite polarity P1, P2 or phase $Ø_1$, $Ø_2$. In this way the collection means 30 may traverse from one pair of conductors 21, 22 in a first lane of a vehicle route through a second pair of conductors 22, 23 (including one conductor 22 of the first pair and an auxiliary or transfer conductor 23) to a third pair of conductors 23, 24 in a second lane of a vehicle route (excluding the first pair of conductors 21, 22, but including the two auxiliary or transfer conductors 23, 24). Turning to Fig. 1C, a three phase alternating current system requires extra current conductors. Essentially there are three conductors 21 to 23 in a route lane; one for each energising characteristic, i.e. each phase $\emptyset_1$, $\emptyset_2$, $\emptyset_3$ plus three auxiliary conductors 24 at overtaking positions in order to provide a second route lane. In consequence, the collection means 30 for use with a three phase alternating current supply system requires at least the four collection elements 31 to 34 shown in Fig. 1C.

In the apparatus of Figs. 1A to 1C a single series of collection elements 31 to 33 or 31 to 34 is employed. This requires that the spacing 36 of width D (Fig. 1A) between collection elements 31 to 34 is less than the width C (Fig. 1A) of the current conductors 21 to 24, thereby ensuring that, during motion of the collection means 30 transversely of the conductors 21 to 24, electrical contact is always maintained with a current conductor of each energising characteristic (P1, P2 or $\emptyset_1$, $\emptyset_2$ or $\emptyset_1$, $\emptyset_2$, $\emptyset_3$).

Fig. 3 shows a modification in which the collection means 30 includes a second series of collection elements 31A to 33A laterally offset in relation to the first series of collection elements 31 to 33 such that as, in use, a spacing 36 of width D between adjacent collection elements 31A, 32A of the second series is aligned with a current conductor 21, a collection element 31 of the first series is in register with that current conductor 21, whereby the spacing 36 may thus have a width D greater than the width C of the current conductors 21 to 24.

In Figs. 1A to 1C the unidirectional current devices D1, D2 coupling each collection element 31 to 33 or 31 to 34 to each direct current terminal means 41, 42 may be diodes and the current at the terminal means 41, 42 may be derived directly from the current of the current conductors 21 to 24. Alternatively, other forms of unidirectional current devices may be employed whereby the current at the terminal means 41, 42 may be derived from the supply current in a controlled manner. For example, the devices D1, D2 may be controlled rectifiers and the vehicle may have appropriate control circuitry for operation by the vehicle driver.

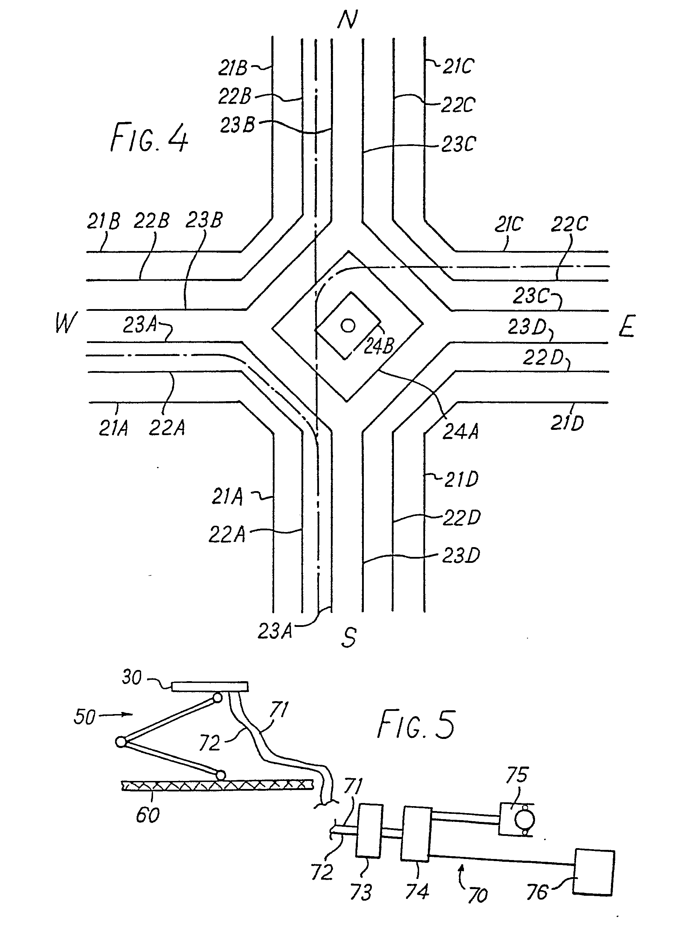

In Fig. 4 there is shown schematically an electrical supply system for an electric vehicle, e.g. a trolley bus, in which the current conductors or cables are routed along a plurality of vehicle routes or bus lanes. For descriptive purposes, it will be assumed that the energising characteristics of the supply system and the current collection apparatus mounted on the vehicle are as shown in Fig. 1A. A similar schematic diagram for each of the supply and collection systems described herein with reference to each of Figs. 1B and 1C is readily derived from Fig. 4.

In Fig. 4 there are four bus lanes designated by the conductors 21A to 23A, 21B to 23B, 21C to 23C and 21D to 23D, on each of which the transfer conductor is designated by the reference 23 followed by the corresponding letter. At the junction transfer conductors 24A and 24B facilitate cross-over between lanes. Compass points north, south, east, and west are designated by the letters N, S, E and W. A chain dotted line indicates alternative routes which a vehicle may take at the junction as it passes up the route lane 21A to 23A in a northerly direction from position S. If the vehicle's destination is to the west W, then it continues to follow the route lane defined by the conductors 21A to 23A and proceeds to the West W in Fig. 4. If the vehicle's destination is to the North N it proceeds across the junction, aided by the transfer conductors 24A, B, to the northerly directed lane defined by the sections of conductors 21B to 23B which lead to the North N. In making this manoeuvre, the collection means 30 (Fig. 1A) progresses from conductors 22A, 23A to conductors 23A, 24A, to conductors 24A, 24B to conductors 23B, 24A and finally to conductors 22B, 23B (of course conductors 21A, 22A may be used at the beginning and end of this sequence). At all times the collection bar 30 contacts a pair of current conductors one of which has polarity P1 and the other of which has polarity P2. The conductors 21, 23 and 24B have a polarity P1 and the conductors 22 and 24A have a polarity P2. For single phase alternating current the conductors 21, 23 and 24B would have phase one ($\emptyset_1$), and the conductors 22 and 24A would have phase two ($\emptyset_2$).

As has been mentioned the current collection apparatus and supply system described herein finds particular application with trolley buses. Such trolley buses may be equipped with a pantograph to carry the collection means or bar 30. Reference is now made to Fig. 5, in which there is shown schematically a pantograph 50 mounted on a vehicle roof 60 and the associated vehicle electrical and power system 70 in block form. The pantograph 50 is mounted on the vehicle roof 60 and has a construction such that the collection bar 30 may be raised and lowered relative to the roof 60 in order to place the collection means or bar 30 in contact with current conductors directly overhead. Certain constructions of pantograph also permit lateral movement of the collection bar 30 relative to the vehicle roof. Whilst the current collection apparatus 10 of the present embodiments avoids the necessity for such movement, nevertheless such a facility is not excluded. The construction of such pantographs 50 and the associated means for their raising and lowering are well known per se. The remainder of the current collection apparatus 10 associated with the collection means 30 (Fig. 1A) is not shown. It will be understood that leads 71, 72 are connected to the terminal means 41, 42 (Fig. 1A) respectively. Internally of the trolley bus 60, leads 71, 72 may be connected to a decoder 73. Decoder 73 is connected to a controller 74 operated by the vehicle driver and the vehicle electrical supply is thereby connected to a motor 75, which drives the vehicle, and the power assisted steering unit 76. Each current collection apparatus of Figs. 1A to 1C are suitable for use with a direct current system and a direct current motor 75. In the event that an alternating current motor 75 is employed it will be necessary to derive alternating current by a suitable circuitry interposed in the vehicle electrical system between the terminals 41, 42 (giving direct current of polarities P1, P2) and the motor 75. In addition, the vehicle electrical system 70 may include batteries (not shown) as an auxiliary power supply in order to permit dual-mode operation in which transfer to or from battery power, at the command of the driver in his cab, can even be carried out whilst the vehicle is in motion. Such a mode change may be deployed under breakdown conditions; or for the innermost streets of major cities (those with ancient buildings) it may be preferred to eliminate the overhead wire system for aesthetic reasons. The pantograph bus could traverse this zone using battery power, and raise its pantograph when free of the restricted area. The supply will not only energise the bus drive system but also recharge the battery package.

Example 1: The pantograph bus

Pantographs are currently used where the positional relationship between the vehicle and the collector wire(s) is rigidly defined. The pantograph bus takes advantage of the ability of a pantograph (where the end of the collector is normally 'ski' profiled) to pick up an adjacent conductor. In the bus case, the pantograph collector bar has to be divided into segments (as explained above) to provide the necessary paths for a complete electrical circuit. In the current collection apparatus of Fig. 1A the collector bar 30 is divided into a minimum of three collection segments. These are coupled through devices D1, D2 to a pair of bus bars 41, 42. Now, regardless of the relative lateral position of the overhead wires (Fig. 2 or Fig. 4) and the pantograph bar 30, the correct polarity P1 or P2 will appear on the appropriate bus bar 41, 42. The manner in which a vehicle may drift transversely to the direction of travel from one set of overhead wires to another set is best understood by reference to (Fig. 2).

Let us start with the vehicle against the kerb of the road at the top of Fig. 2 (position 2.1). Contact with the overhead wires being made by the left-hand segment 31 of the collector bar 30 and with the centre segment 32. As the vehicle moves to the right, contact is made (for a short period) with the right-hand segment 33 together with the left-hand segment 31, as well as the centre segment 32 (each segment being shorter than the space between the cables)—positions 2.2 and 2.3. A further short movement to the right (position 2.4) however, results in the circuit being maintained by the centre segment 32 together with the right-hand segment 33. As the vehicle travels further to the right, the left-hand segment 31 approaches the cable 22 (positions 2.5 onwards) whilst the right-hand segment approaches the cable 24.

Eventually segment 31 contacts cable 23 and segment 32 contacts cable 24, whereby the trolley bus has transferred from the lane defined by cables 21, 22 to the lane defined by cables 23, 24. At certain positions e.g. positions 2.2 and 2.8 all three segments 31 to 33 are in contact with overhead cables (21 to 23 and 22 to 24 respectively. In each of these positions 2.2 and 2.8 a pair of segments are in contact with cables of the same polarity. This lane transfer enables a pantograph trolley bus to pass a second vehicle (at the kerb) and connected to the original pair of cables 21, 22. The same process occurs when a vehicle is switched from one route lane to another route lane.

Further modifications to the arrangement of the collection elements 31 to 34 illustrated in Figs. 1A to 1C (in addition to the modifications of Fig. 3) are possible. Mention has been made that each Figure illustrates the minimum number of elements for use with its supply system and that the parallel arrangement of the elements 31 to 34 is illustrative. Obviously, the elements may be staggered in the direction of travel and their width and number varied provided that two requirements are maintained, namely the avoidance of short-circuiting by ensuring that dimension B is less than dimension A (Fig. 1A), and that the length of the collector bar 30 is sufficient to ensure at all times that current paths are maintained between current conductors of each energising characteristic (whether P1, P2 or $\emptyset_1$, $\emptyset_2$ or $\emptyset_1$, $\emptyset_2$, $\emptyset_3$ and each terminal means (41, 42)).

It is necessary that the spacing between 3 adjacent overhead wires 21 to 23 is less than the active overall length L of the pantograph collector bar multiplied by the cosine of the angle between the direction in which the vehicle is moving and the direction of the overhead wire system: a maximum angle e.g. 30° can be assumed.

Within these essential parameters, there is the further modification of the collection means 30 of Figs. 1A and B which is shown in Fig. 6. Instead of the three contact elements 31 to 33 being parallel and spaced laterally by insulating segments 36 of width D less than the conductor width C, it is possible (as shown in Fig. 6) to stagger the position of the central collection element 32 (in the direction of travel) relative to the collection elements 31, 33 and to arrange that the central element 32 bridges the insulating segment 36 extending laterally either side thereof. In common with the embodiment of Fig. 3, in this embodiment of the collection means 30, the width D of the insulating segment 36 may exceed the width C of the current collectors 21 to 24. It will be readily apparent that a similar modification may be made to the collection means 30 of Fig. 1C. It is also worth noting that the collection apparatus 10 described is capable of deriving power from parallel lanes of supply systems, where the energising characteristics in one lane are for example direct current and the energising characteristics in the second lane are for example single phase alternating current.

Referring to Fig. 2 conductors 21, 22 may carry direct current of polarities P1, P2 and conductors 23, 24 may carry single phase current $\emptyset_1$, $\emptyset_2$. From the aforegoing description of the apparatus of Figs. 1A and 1B and the description given in relation to Fig. 2, it will be readily apparent that the terminals 41, 42 will be continuously energised with such a combination of supply systems in parallel lanes when the collection means 30 transfers from one lane to the other. This facility has great practical significance where a new alternating current supply system for trolley buses is routed alongside and existing direct current supply system previously installed for trams during a transition phase in transport development.

## Claims

1. Current collection apparatus for an electric road vehicle, such as a trolley bus, with a pantograph, the apparatus being energised by an overhead electrical supply system comprising a plurality of spaced substantially parallel conductors (21, 22; 21 to 23) extending in the intended direction of travel of the vehicle and corresponding in number at least to the number of conductors required to carry different energising characteristics of the supply system plus at least one spaced and parallel auxiliary transfer conductor, said apparatus comprising collection means (30) having a plurality of separate collection elements (31 to 33; 31 to 34) having a dimension (B) less than the spacing (A) between adjacent overhead conductors, separate direct current terminal means (41, 42) for each polarity (P1, P2) of a direct current vehicle electrical supply system, a pair of oppositely arranged unidirectional current conducting devices (D1, D2) coupling each collection element (31—33; 31—34) to each terminal means (41, 42) whereby each terminal means, in use, receives current of a respective polarity (P1, P2) characterised in that for lateral displacement of the collecting means (30) relative to the overhead conductors without interrupting the current supply to the terminal means (41, 42) the collection means (30) comprises a collector bar (30) intended to extend transversely of the overhead conductors and composed of a plurality of collection elements (31—33; 31—34) distributed in spaced apart and parallel or aligned arrangement along the length of the collector bar and corresponding in number at least to the number of overhead conductors required to carry the different energising characteristics plus the auxiliary transfer conductor and the spacing between the auxiliary transfer conductor and the most remote of the adjacent number of overhead conductors required to carry the different energising characteristics is less than the effective length of the collector bar multiplied by the cosine of an angle not greater than 30°.

2. Current collection apparatus according to claim 1 for use with an electrical supply system having current conductors with only two different energising characteristics (P1, P2, $\emptyset$1, $\emptyset$2) characterised in that the collector bar (30) comprises at least three spaced parallel collection elements (31—33) arranged such that as the collector bar (30) moves transversely of the parallel current conductors (21—23), a pair of the collection elements (31, 32; 31, 33; 32, 33) provides contact with a pair of current conductors (21, 22; 21, 23; 22, 23) of different energising characteristics (P1, P2, $\emptyset$1, $\emptyset$2).

3. Current collection apparatus according to claim 1 for use with a three phase alternating current system having current conductors (21, 22, 23) of three energising characteristics ($\emptyset$1, $\emptyset$2, $\emptyset$3) and an auxiliary transfer conductor (24) having an energising characteristic ($\emptyset$1) corresponding to the most remote (21) of the overhead conductors (21, 22, 23) required to carry the different energising characteristics, characterised in that the collector bar has at least four collection elements (31—34) arranged such that, as the collector bar moves transversely of the parallel current conductors (21—24), three of the collection elements (31—34) provides contact with three of the conductors (21—24) each of a different energising characteristic ($\emptyset$1, $\emptyset$2, $\emptyset$3).

4. Current collecting apparatus according to claims 2 or 3 characterised in that the collection elements (31—33; 31—34) are spaced in their direction of length by a distance (D) which is less than the width (C) of the overhead conductors in a direction normal to their direction of length.

5. Current collecting apparatus according to claims 2 or 3 characterised in that the collector bar (30) comprises a first series of collection elements (31, 33; 31, 34) spaced in their direction of length by a distance (D) which is greater than the width (C) of the overhead conductors in a direction normal to their direction of length and a second series of collection elements (31A, 33A) spaced from and parallel to the first series with the spacing between collection elements of the second series aligned with collection elements of the first series.

6. Current collecting apparatus according to any one of claims 1 to 4 characterised in that the spaced parallel collection elements (31—33; 31—34) of the collector bar (30) are alternately staggered in the intended direction of travel to provide two parallel series of collection elements with the collection elements of one series bridging the spacing between the collection elements of the other series.

7. The combination of current collecting apparatus according to any one of the preceding claims with an overhead electrical supply system characterised in that the supply system comprises a plurality of non-intersecting lanes (21A, 22A, 23A; ... 21D, 22D, 23D) each defined by the number of overhead conductors required to carry the different energising characteristics plus the auxiliary transfer conductor (23A; ... 23D) and a further number of auxiliary transfer conductors (24A, 24B) corresponding to the number of conductors required to carry the different energising characteristics, said further number of auxiliary transfer conductors being arranged each in a closed configuration in spaced relationship to each other and the auxiliary transfer conductor of each lane (Fig. 4).

**Patentansprüche**

1. Stromabnahmevorrichtung für ein elektrisches Straßenfahrzeug, wie einen Obus, mit einem Scherenstromabnehmer, wobei die Vorrichtung durch ein elektrisches Oberleituns-Zuführungssystem mit Energie versorgt wird, welches eine Mehrzahl von in Abstand angeordneten, im wesentlichen parallelen Leitern (21, 22; 21 bis 23) umfaßt, die in der vorgesehenen Fahrtrichtung des Fahrzeuges verlaufen und in der Anzahl zumindest der Anzahl der zur Erbringung verscheidener Energieversorgungseigenschaften des Zuführungssystems erforderlichen Leiter plus wenigstens einem in Abstand angeordneten und parallelen Hilfs-übergangsleiter entsprechen, welche Vorrichtung eine Abnehmereinrichtung (30) mit einer Mehrzahl von gesonderten Abnehmerelementen (31 bis 33; 31 bis 34) die eine Abmessung (B) kleiner als der Abstand (A) zwischen benachbarten Oberleitungs-Leitern haben, gesonderte Gleichstromanschlußmittel (41, 42) für jede Polarität (P1, P2) eines elektrischen Fahrzeuggleichstromversorgungssystems, ein Paar von entgegengestzt angeordneten, Strom in einer Richtung führenden Einrichtungen (D1, D2) aufweist, welche jedes Abnehmerelement (31—33; 31—34) mit jedem Anschlußmittel (41, 42) koppeln, wodurch jedes Anschlußmittel im Betrieb Strom mit einer entsprechenden Polarität (P1, P2) empfängt, dadurch gekennzeichnet, daß zur seitlichen Verschiebung der Abnehmereinrichtung (30) relativ zu den Oberleitungs-Leitern ohne Unterbrechung der Stromzuführung zu den Anschlußmitteln (41, 42) die Abnehmereinrichtung (30) eine Abnahmeschiene (30) aufweist, die für eine Erstreckung quer zu den Oberleitungs-Leitern vorgesehen und aus einer Mehrzahl von Abnehmerelementen (31—33; 31—34) zusammengesetzt ist, die in Abständen voneinander verteilt und in paralleler oder fluchtender Anordnung längs der Abnahmeschiene vorgesehen sind und in der Anzahl zumindest der Anzahl der Oberleitungs-Leiter, die zur Erbringung der verschiedenen Energieversorgungseigenschaften erforderlich sind, plus dem Hilfsübegangsleiter entsprechen, und wobei der Abstand zwischen dem Hilfs-übergangsleiter und dem am weitesten entfernten der benachbarten Anzahl von Oberleitungs-Leitern, die zur Erbringung der verschiedenen Energieversorgungseigenschaften erforderlich sind, kleiner ist als die effektive Länge der Abnahmeschiene, multipliziert mit dem Cosinus eines Winkels, der nicht größer als 30° ist.

2. Stromabnahmevorrichtung nach Anspruch 1, zur Verwendung bei einem elektrischen Zuführungssystem mit Stromleitern, die nur zwei verschiedene Energieversorgungseigenschaften (P1, P2; Ø1, Ø2) besitzen, dadurch gekennzeichnet, daß die Abnahmeschiene (30) zumindest drei in Abstand voneinander angeordnete parallele Abnehmerelemente (31—33) aufweist, die derart angeordnet sind, daß ein Paar der Abnehmerelemente (31, 32; 31, 33; 32, 33) mit einem Paar der Stromleiter (21, 22; 21, 23; 22, 23) mit verschiedenen Energieversorgungseigenschaften (P1, P2, Ø1, Ø2) einen Kontakt herstellt, wenn sich die Abnahmeschiene (30) quer zu den parallelen Stromleitern (21—23) bewegt.

3. Stromabnahmevorrichtung nach Anspruch 1, zur Verwendung in einem Dreiphasen-Wechselstromsystem mit Stromleitern (21, 22, 23) mit drei Energieversorgungseigenschaften (Ø1, Ø2, Ø3) und einem Hilfs-übergangsleiter (24) mit einer Energieversorgungseigenschaft (Ø1), die dem am weitesten entfernten (21) der zur Erbringung der verschiedenen Energieversorgungseigenschaften erforderlichen Oberleituns-Leitern (21, 22, 23) entspricht, dadurch gekennzeichnet, daß die Abnahmeschiene zumindest vier Abnehmerelemente (31—34) besitzt, die derart angeordnet sind, daß drei der Abnehmerelemente (31—34) mit drei der Leiter (21—24), von denen jeder eine andere Energieversorgungseigenschaft (Ø1, Ø2, Ø3) besitzt, einen Kontakt herstellen, wenn sich die Abnahmeschiene quer zu den parallelen Stromleitern (21—24) bewegt.

4. Stromabnahmevorrichtung nach Anspruch 2 oder 3, dadurch gekennzeichnet, daß die Abnehmerelemente (31—33; 31—34) in ihrer Längsrichtung in einem Abstand (D) voneinander angeordnet sind, der kleiner ist als die Breite (C) der Oberleitungs-Leiter in einer Richtung senkrecht zu ihrer Längsrichtung.

5. Stromabnahmevorrichtung nach Anspruch 2 oder 3, dadurch gekennzeichnet, daß die Abnahmeschiene (30) eine erste Reihe von Abnehmerelementen (31, 33; 31, 34), die in ihrer Längsrichtung in einem Abstand (D) voneinander entfernt angeordnet sind, der größer als die Breite (C) der Oberleitungs-Leiter in einer richtung senkrecht zu ihrer Längsrichtung ist, und einer zweiten Reihe von Abnehmerelementen (31A, 33A) aufweist, die in Abstand von und parallel zu der ersten Reihe vorgesehen sind, wobei der Zwischenraum zwischen den Abnehmerelementen der zweiten Reihe zu den Abnehmerelementen der ersten Reihe ausgerichtet ist.

6. Stromabnahmevorrichtung nach einem der Ansprüche 1 bis 4, dadurch gekennzeichnet, daß die in Abstand voneinander angeordneten parallelen Abnehmerelemente (31—33; 31—34) der Abnahmeschiene (30) abwechselnd in der beabsichtigten Fahrtrichtung versetzt angeordnet sind, um zwei parallele Reihen von Abnehmerelementen vorzusehen, wobei die Abnehmerelemente der eine Reihe den Zwischenraum zwischen den Abnehmerelementen der anderen Reihe überbrücken.

7. Kombination einer Stromabnahmevorrichtung gemäß einem der vorhergehenden Ansprüche mit einem elektrischen Oberleitungs-Zuführungssystem, dadurch gekennzeichnet, daß das Zuführungssystem eine Vielzahl von einander nicht schneidenden Routen (21A, 22A, 23A: ... 21D, 22D, 23D) aufweist, wobei jeder durch die Anzahl der Oberleitungs-Leiter definiert wird, die erforderlich sind, um die verschiedenen Energieversorgungseigenschaften vorzusehen, plus dem Hilfs-übergangsleiter (23A; . . . 23D) und eine weitere Anzahl von Hilfs-übergangsleitern (24A, 24B), die der Anzahl von Leitern entspricht, die erforderlich sind, um die verschiedenen Energieversorgungseigenschaften zu erbringen, wobei diese weitere Anzahl von Hilfs-übergangsleitern in geschlossener Konfiguration in Abstand voneinander un vom Hilfs-übergangsleiter jeder Route angeordnet sind (Fig. 4).

**Revendications**

1. Dispositif collecteur de courant pour véhicule routier électrique, tel que trolley bus, muni d'un pantographe, le dispositif étant excité par un système d'alimentation électrique aérien, qui comprend une pluralité de conducteurs espacés, sensiblement parallèles (21, 22; 21 à 23), s'étendant dans la direction désirée du déplacement du véhicule et dont le nombre correspond au moins à celui des conducteurs nécessaires pour supporter les différentes caractéristiques d'excitation en énergie du système d'alimentation, plus au moins un conducteur de transfert auxiliaire, espacé et parallèle, ledit dispositif comprenant des moyens collecteurs (30) comportant une pluralité d'éléments collecteurs séparés (31 à 33; 31 à 34) dont la dimension (B) est inférieure à l'espacement (A) séparant des conducteurs aériens adjacents, des bornes séparées de courant continu (41, 42) pour chaque polarité (P1, P2) d'un système d'alimentation électrique d'un véhicule en courant continu, une paire de dispositifs conducteurs de courant unidirectionnels, disposés de façon opposée (D1, D2) couplant chaque élément collecteur (31—33; 31—34) à chaque borne (41, 42), de manière que chaque borne, lorsqu'elle est en service, reçoive du courant d'une polarité respective (P1, P2), caractérisé en ce que, en vue du déplacement latéral des moyens collecteurs (30), par rapport aux conducteurs aériens, sans interrompre l'alimentation en courant des bornes (41, 42), les moyens collecteurs (30) comprennent une barre colletrice (30), qui s'étend transversalement aux conducteurs aériens et qui est composée d'une pluralité d'éléments collecteurs (31—33; 31—34), répartis de façon espacée, parallèlement ou alignés, le long de la barre collectrice et dont le nombre correspond à celui des conducteurs aériens nécessaires pour supporter les caractéristiques d'excitation en énergie, plus le conducteur de transfert auxiliaire et en ce que el'espacement entre le conducteur de transfert et le plus éloigné du nombre adjacent de conducteurs aériens, nécessaires pour supporter les différentes caractéristiques d'excitation en énergie, est inférieur à la longueur effective de la barre collectrice multipliée par le cosinus d'un angle pas plus grand que 30°.

2. Dispositif collecteur de courant selon la revendication 1, devant être utilisé avec un système d'alimentation électrique qui comporte des conducteurs de courant n'ayant que deux caractéristiques différentes d'excitation en énergie (P1, P2; Ø1, Ø2), caractérisé en ce que la barre collectrice (30) comprend au moins trois éléments collecteurs parallèles et espacés (31—33), disposés de manière que, lorsque la barre collectrice (30) se déplace transversalement aux conducteurs parallèles de courant (21—23), une paire d'éléments collecteurs (31, 32; 31, 33; 32, 33) assure un contact avec une paire de conducteurs de courant (21, 22; 21, 23; 22, 23), ayant des caractéristiques d'excitation différentes (P1, P2; Ø1, Ø2).

3. Dispositif collecteur de courant selon la revendication 1, devant être utilisé avec un système de courant alternatif triphasé, comportant des conducteurs de courant (21, 22, 23) de trois caractéristiques d'excitation en énergie (Ø1, Ø2, Ø3), et un conducteur auxiliaire de transfert (24), ayant une caractéristique d'excitation en énergie (Ø1), qui correspond au plus éloigné (21) des conducteurs aériens (21, 22, 23), nécessaire pour supporter les différentes caractéristiques d'excitation, caractérisé en ce que la barre collectrice comporte au moins quatre éléments collecteurs (31—34), disposés de manière que, lorsque la barre collectrice se déplace transversalement aux conducteurs de courant parallèles (21—24), trois des éléments collecteurs (31—34) assurent le contact avec trois des conducteurs (21—24) ayant chacun une caractéristique d'excitation différente (Ø1, Ø2, Ø3).

4. Dispositif collecteur de courant selon la revendication 2 ou 3, caractérisé en ce que les éléments collecteurs (31—33; 31—34) sont espacés dans le sens de la longueur, selon une distance (D), qui est inférieure à la largeur (C) des conducteurs aériens, dans une direction perpendiculaire à celle de la longueur.

5. Dispositif collecteur de courant selon la revendication 2 ou 3, caractérisé en ce que la barre collectrice (30) comprend une première série d'éléments collecteurs (31—33; 31—34), espacés, dans le sens de leur longueur, selon une distance (D), qui est plus grande que la largeur (C) des conducteurs aériens, dans, une direction perpendiculaire à leur longueur, et une seconde série d'éléments collecteurs (31A, 33A), espacés de, et parallèles à, la première série, l'espacement entre les éléments collecteurs de la seconde série étant aligné avec les éléments collecteurs de la première série.

6. Dispositif collecteur de courant selon l'une quelconque des revendications 1 à 4 caractérisé en ce que les éléments collecteurs parallèles et espacés (31—33; 31—34) de la barre collectrice (30) sont alternativement décalés dans le sens désiré du déplacement, afin d'obtenir deux séries parallèles d'éléments collecteurs, les éléments collecteurs d'une série recouvrant l'espacement séparant les éléments collecteurs de l'autre série.

7. Combinaison du dispositif collecteur de courant selon l'une quelconque des revendications précédentes avec un système d'alimentation électrique aérien, caractérisée en ce que le système d'alimentation comprend une pluralité de voies qui ne se recoupent pas (21A, 22A, 23A; ... 21D, 22D, 23D), chaque voie étant définie par le nombre de conducteurs aériens nécessaire pour supporter les différentes caractéristiques d'excitation, plus le conducteur auxiliaire de transfert (23A; .... 23D) et, un nombre supplémentaire de conducteurs de transfert auxiliaires (24A, 24B), qui correspond au nombre de conducteurs nécessaire pour supporter les différentes caractéristiques d'excitation, ledit nombre supplémentaire de conducteurs de transfert auxiliaires étant chacun disposé dans une configuration fermée, en relation d'espacement les uns par rapport aux autres et par rapport au conducteur de transfert auxiliaire de chaque voie (Fig. 4).

FIG.1A

FIG.1B

FIG.1C

FIG. 2

FIG. 3

FIG. 6

FIG. 4

FIG. 5